# EUROPÄISCHE PATENTSCHRIFT

(11) **EP 4 237 278 B1**
(45) Veröffentlichungstag und Bekanntmachung des Hinweises auf die Patenterteilung: **17.04.2024**
(21) Anmeldenummer: 21805647.1
(22) Anmeldetag: 28.10.2021
(51) Int. Cl.: B60N 2/12, B60N 2/02, B60N 2/90

(54) **FAHRZEUGSITZ**
VEHICLE SEAT
SIÈGE DE VÉHICULE

(30) Priorität: 02.11.2020 DE 102020128812; 17.11.2020 DE 102020130355
(43) Veröffentlichungstag der Anmeldung: 06.09.2023
(73) Patentinhaber: Adient US LLC, Plymouth MI 48170 (US)
(72) Erfinder: KAEMMERER, Joachim, 67663 Kaiserslautern (DE); RECKTENWALD, Ralph, 66629 Freisen (DE); KUNZ, Holger, 67697 Otterberg (DE)
(74) Vertreter: Liedhegener, Ralf
(86) Internationale Anmeldenummer: PCT/IB2021/059964
(87) Internationale Veröffentlichungsnummer: WO 2022/090984

(56) Entgegenhaltungen:
- WO-A2-2019/096774
- DE-A1-102018 208 641

## Beschreibung

Die Erfindung betrifft einen Fahrzeugsitz, insbesondere Kraftfahrzeugsitz, mit einem Sitzteil, einer Lehne, einer Kinematik zur Überführung des Fahrzeugsitzes von einer zur Personenbeförderung geeigneten Gebrauchsstellung in eine Einstiegsstellung und zurück, einer Antriebsvorrichtung zum Antrieb der Kinematik und einer Kupplungsvorrichtung zur Kopplung der Antriebsvorrichtung an die Kinematik, die Kupplungsvorrichtung aufweisend eine Klinke und ein Gegenelement, insbesondere einen Bolzen, wobei zur Kopplung der Antriebsvorrichtung an die Kinematik die Klinke und das Gegenelement miteinander verriegelbar sind, und durch eine Betätigung der Kupplungsvorrichtung die Klinke von dem Gegenelement lösbar ist, wodurch die Antriebsvorrichtung von der Kinematik entkoppelbar ist.

### Stand der Technik

Die WO 01/83258 A1 offenbart einen Fanghaken eines Lehneneinstellbeschlags für Fahrzeugsitze, der zur lösbaren Verriegelung des zusammen mit einem Sitzteil vorschwenkbaren, und in Sperrlage an einem Anschlag eines Sitzuntergestells anliegenden Beschlagteiles, an diesem Beschlagteil drehgelenkig gehaltert und in einer Sperrrichtung mittels eines Kraftspeichers beaufschlagt ist, und der Fanghaken in der Sperrlage den Anschlag mit seinem Hakenmaul hintergreift, wobei dem Fanghaken eine den Anschlag bei Sperrlage ebenfalls hintergreifende Spannklinke nebengeordnet ist, die ihrerseits am Fanghaken selbst schwenkbar gelagert und bedarfsweise aus der Sperrlage mittels eines Betätigungsgliedes lösbar ist, wobei die Spannklinke allein durch einen einzigen Kraftspeicher in Sperrrichtung belastet ist und die Spannklinke mit dem Fanghaken über Stützglieder in Bewegungsrichtung voreilbar gekuppelt ist.

Aus der DE 10 2019 133 959 A1 ist ein Fahrzeugsitz bekannt, mit einem Sitzteil, einer Lehne, und einer Kinematik zur Überführung des Fahrzeugsitzes von einer zur Personenbeförderung geeigneten Gebrauchsstellung in eine Einstiegsstellung, insbesondere eine den Einstieg in eine hintere Sitzreihe erleichternde Einstiegsstellung, wobei der Fahrzeugsitz mittels einer Antriebsvorrichtung von der Gebrauchsstellung in die Einstiegsstellung und umgekehrt überführbar ist, wobei die Kinematik und die Antriebsvorrichtung zur angetriebenen Überführung des Fahrzeugsitzes mittels einer Kupplungsvorrichtung miteinander koppelbar sind, wobei die Kinematik, zu einer manuellen Überführung des Fahrzeugsitzes in die Einstiegsstellung, durch eine Betätigung der Kupplungsvorrichtung von der Antriebsvorrichtung entkoppelbar ist. Die Kupplungsvorrichtung weist ein um eine Drehachse schwenkbar gelagertes Kupplungsmittel auf. Das Kupplungsmittel weist eine mit dem Bolzen wirkverbindbare Klinke und ein einen mit dem Kupplungsmittel zusammenwirkenden Entriegelungshebel auf. Bewirkt eine Betätigung des Entriegelungshebels eine Entriegelung des Kupplungsmittels, wird die Klinke geöffnet, so dass der Bolzen aus dem Kupplungsmittel austreten kann.

Die WO 2015/104228 A1 offenbart einen Fahrzeugsitz mit einer Antriebsvorrichtung, die ein Ritzel umfasst, das mit einer Verzahnung einer Höheneinstellkinematik in Zahneingriff ist, wobei die Antriebsvorrichtung an einem Strukturteil des Fahrzeugsitzes befestigt ist.

### Aufgabe

Der Erfindung liegt die Aufgabe zu Grunde, einen Fahrzeugsitz eingangs genannter Art zu verbessern, insbesondere einen solchen Fahrzeugsitz, der der sowohl elektromotorisch angetrieben von einer Gebrauchsstellung in eine Einstiegsstellung als auch zur Bereitstellung eines Notausstiegs manuell von der Gebrauchsstellung in die Einstiegsstellung überführbar ist, mit weniger Bauteilen und dadurch reduzierten Kosten bereitzustellen.

### Lösung

Diese Aufgabe wird erfindungsgemäß gelöst, durch einen Fahrzeugsitz, insbesondere Kraftfahrzeugsitz, mit einem Sitzteil, einer Lehne, einer Kinematik zur Überführung des Fahrzeugsitzes von einer zur Personenbeförderung geeigneten Gebrauchsstellung in eine Einstiegsstellung und zurück, einer Antriebsvorrichtung zum Antrieb der Kinematik und einer Kupplungsvorrichtung zur Kopplung der Antriebsvorrichtung an die Kinematik, die Kupplungsvorrichtung aufweisend eine Klinke und ein Gegenelement, insbesondere einen Bolzen, wobei zur Kopplung der Antriebsvorrichtung an die Kinematik die Klinke und das Gegenelement miteinander verriegelbar sind, und durch eine Betätigung der Kupplungsvorrichtung die Klinke von dem Gegenelement lösbar ist, wodurch die Antriebsvorrichtung von der Kinematik entkoppelbar ist, wobei die Klinke als eine Spannklinke ausgeführt ist, wobei die Klinke und das Gegenelement außerhalb der Selbsthemmung miteinander verriegelbar sind.

Die Spannklinke weist vorzugsweise eine Spannkurve (gekrümmte Anlagefläche) zum Zusammenwirken mit dem Gegenelement, insbesondere dem Bolzen, auf. Die Steigung der Spannkurve ist so gewählt, dass keine Selbsthemmung zwischen der Spannkurve und dem Gegenelement vorhanden ist, aber in einem Normalbetrieb des Fahrzeugsitzes ein durch diesen Normalbetrieb auf die Spannklinke wirkendes, öffnendes Drehmoment kleiner ist als ein diesem entgegengesetztes, schließendes Drehmoment, das insbesondere von einer vorgespannten Feder erzeugt ist, die die Spannklinge in Schließrichtung mit einer Federkraft beaufschlagt.

Selbsthemmung beschreibt in der Mechanik einen durch Reibung verursachten Widerstand gegen ein Verrutschen oder ein Verdrehen zweier aneinander anliegender Anlageflächen zweier Körper. Sobald eine Haftreibung überschritten ist, sind die Anlageflächen nicht mehr in der Selbsthemmung und bewegen sich zueinander. Die Selbsthemmung wird insbesondere durch einen Neigungswinkel zwischen den Anlageflächen, die Oberflächenrauigkeit der Anlageflächen und die Werkstoffpaarung beeinflusst.

Dadurch, dass die Klinke als eine Spannklinke ausgeführt ist, wobei die Klinke und das Gegenelement außerhalb der Selbsthemmung miteinander verriegelbar sind, ist für eine Entkopplung der Kinematik von der Antriebsvorrichtung kein Entriegelungsmechanismus notwendig. Zum Einsatz kommt eine Spannklinke, die bei Einleitung einer definierten Betätigungskraft, beispielsweise eingeleitet an einer Lehnenoberkante der Lehne, selbsttätig öffnet. Eine Betätigung, das heißt vorliegend Entriegelung, der Kupplungsvorrichtung kann somit durch Einleitung einer definierten Last, beispielsweise eingeleitet an einer Lehnenoberkante, erfolgen. Zur manuellen Entkopplung des Fahrzeugsitzes von der Antriebsvorrichtung, insbesondere für einen Notausstieg durch eine manuelle Überführung des Fahrzeugsitzes aus der Gebrauchsstellung in die Einstiegsstellung, ist somit kein Entriegelungsmechanismus (insbesondere kein Bowdenzug) erforderlich. Dadurch ergibt sich eine Kostenreduktion gegenüber dem in der DE 10 2019 133 959 A1 beschriebenen Fahrzeugsitz.

Dadurch, dass die Kinematik zu einer manuellen Überführung des Fahrzeugsitzes in die Einstiegsstellung, durch eine Betätigung der Kupplungsvorrichtung von der Antriebsvorrichtung entkoppelbar ist, ist eine Möglichkeit geschaffen, in Notsituationen oder Situationen, in denen eine Energieversorgung der Antriebsvorrichtung ausgefallen oder stromlos gestellt ist, den Fahrzeugsitz in wenigstens die Einstiegsstellung zu überführen, um leichteren Zugang zu oder Ausgang aus einem Innenraum eines Fahrzeugs zu gewährleisten.

In der Einstiegsstellung sind bevorzugt Teile des Fahrzeugsitzes, insbesondere die Lehne und das Sitzteil nach vorne geschwenkt, um den Zutritt zu einer hinteren Sitzreihe zu erleichtern. Dabei kann der Fahrzeugsitz auch einen Sitzschienen aufweisenden Längseinsteller aufweisen, der zur Einnahme der Einstiegsstellung entriegelbar ist, so dass der Fahrzeugsitz zusätzlich nach vorne schiebbar ist.

Der Fahrzeugsitz kann ein Fahrzeugsitz innerhalb einer mehrteiligen Sitzbank sein. Der Fahrzeugsitz kann eine ungeteilte Sitzbank sein.

Das Sitzteil kann wenigstens mittelbar mit einer Fahrzeugstruktur verbindbar sein. Der Fahrzeugsitz kann mit wenigstens einer Sitzschiene eines Längseinstellers verbindbar sein. Der Längseinsteller kann eine Sitzschiene sowie eine relativ zur Sitzschiene verschiebbare Bodenschiene aufweisen, die zur Einstellung einer Sitzlängsposition miteinander verriegelbar sind. Der Längseinsteller kann ein elektromotorisch antreibbarer Längseinsteller sein. Der Längseinsteller kann zur manuellen Überführung des Fahrzeugsitzes in die Einstiegsstellung entriegelbar sein. Eine Entriegelung des Längseinstellers kann an eine Betätigung der Kupplungsvorrichtung gekoppelt sein, so dass der Längseinsteller entriegelt, wenn die Kupplungsvorrichtung von der Antriebsvorrichtung entkoppelt ist.

Das Gegenelement ist vorzugsweise ausschließlich mit der Klinke verriegelbar. Insbesondere kann ein Einsatz einer weiteren Klinke, beispielsweise einer Fangklinke, entfallen. Die Kupplungsvorrichtung ist somit vorzugsweise ausschließend außerhalb der Selbsthemmung verriegelbar. Ein Kraftspeicher, insbesondere eine Feder, kann die Klinke in Richtung einer mit dem Gegenelement verriegelnden Stellung vorspannen. Dadurch lässt sich in einem Normalbetrieb des Fahrzeugsitzes ein Öffnen der als Spannklinke (außerhalb der Selbsthemmung) ausgelegten Klinke vermeiden.

Die Kupplungsvorrichtung kann durch Aufbringen einer Betätigungskraft auf den Fahrzeugsitz, insbesondere auf die Lehne des Fahrzeugsitzes, betätigbar sein, das heißt, die Klinke kann durch das Aufbringen der Betätigungskraft auf den Fahrzeugsitz geöffnet werden. Durch das Aufbringen der Betätigungskraft auf den Fahrzeugsitz kann die Klinke über das Gegenelement mit einem öffnenden Drehmoment beaufschlagbar sein, wobei die Klinke von dem Gegenelement lösbar ist, indem das öffnende Drehmoment größer ist als ein durch den Kraftspeicher auf die Klinke ausgeübtes schließendes Drehmoment.

Die Antriebsvorrichtung kann einen Elektromotor aufweisen. Die Antriebsvorrichtung kann einen Elektromotor und ein Getriebe aufweisen. Die Antriebsvorrichtung kann einen Getriebemotor aufweisen. Die Antriebsvorrichtung kann einen Spindelantrieb aufweisen oder einen Spindelantrieb antreiben. Die Antriebsvorrichtung kann ein Getriebe mit einer Ausgangswelle aufweisen, wobei insbesondere ein Ritzel mit der Ausgangswelle verbunden ist.

Die Kupplungsvorrichtung kann ein Kupplungsmittel und ein Kupplungsglied aufweisen. Das Kupplungsglied ist vorzugsweise mit der Antriebsvorrichtung wirkverbunden. Das Kupplungsglied kann mit einer Spindelmutter verbunden sein. Das Kupplungsglied kann schwenkbar mit einer Spindelmutter verbunden sein. Die Spindelmutter kann mit einer Spindel, insbesondere einer Spindel der Antriebsvorrichtung, zusammenwirken. Die Spindelmutter kann auf die Spindel aufgeschraubt sein.

Das Kupplungsglied kann eine Verzahnung aufweisen. Die Verzahnung kann eine Innenverzahnung sein. Die Verzahnung kann eine Außenverzahnung sein. Die Verzahnung kann mit einem Ritzel, insbesondere einem Ritzel der Antriebsvorrichtung zusammenwirken.

Die Klinke kann an dem einen von Kupplungsmittel und Kupplungsglied angelenkt sein und das Gegenmittel an dem anderen von Kupplungsmittel und Kupplungsglied befestigt sein. Die Klinke kann an einem Träger des Kupplungsmittels schwenkbar angelenkt sein. Das Kupplungsmittel und das Kupplungsglied können um eine gemeinsame Schwenkachse schwenkbar gelagert sein. Im betätigten Zustand der Kupplungsvorrichtung können das Kupplungsmittel und das Kupplungsglied relativ zueinander um die gemeinsame Schwenkachse schwenkbar sein. Die gemeinsame Schwenkachse kann mit einer Drehachse eines Drehgelenks der Kinematik fluchten. Die gemeinsame Schwenkachse kann mit einer Drehachse eines Drehgelenks einer Schwinge der Kinematik fluchten. Die Kinematik kann eine Schwinge aufweisen, wobei die Schwinge mittels eines Drehgelenks um die gemeinsame Schwenkachse schwenkbar ist.

Zusammenfassend und mit anderen Worten ausgedrückt, wird die Aufgabe erfindungsgemäß gelöst, durch einen Fahrzeugsitz, insbesondere Kraftfahrzeugsitz, mit einem Sitzteil, einer Lehne, und einer Kinematik zur Überführung des Fahrzeugsitzes von einer zur Personenbeförderung geeigneten Gebrauchsstellung in eine Einstiegsstellung, insbesondere eine den Einstieg in eine hintere Sitzreihe erleichternde Einstiegsstellung, wobei der Fahrzeugsitz mittels einer Antriebsvorrichtung von der Gebrauchsstellung in die Einstiegsstellung und umgekehrt überführbar ist, wobei die Kinematik und die Antriebsvorrichtung zur angetriebenen Überführung des Fahrzeugsitzes mittels einer Kupplungsvorrichtung miteinander koppelbar sind, wobei die Kinematik, zu einer manuellen Überführung des Fahrzeugsitzes in die Einstiegsstellung, durch eine Betätigung der Kupplungsvorrichtung von der Antriebsvorrichtung entkoppelbar ist, wobei die Kupplungsvorrichtung eine, insbesondere mit einem Bolzen wirkverbindbare, Klinke aufweist, wobei die Klinke als eine Spannklinke ausgeführt ist.

### Figuren und Ausführungsformen der Erfindung

Im Folgenden ist die Erfindung anhand zweier in den Figuren dargestellter vorteilhafter Ausführungsbeispiele näher erläutert. Die Erfindung ist jedoch nicht auf diese beiden Ausführungsbeispiele beschränkt. Es zeigen schematisch:
- Fig. 1:: eine Seitenansicht eines erfindungsgemäßen Fahrzeugsitzes gemäß eines ersten Ausführungsbeispiels in einer Gebrauchsstellung,
- Fig. 2:: eine Seitenansicht des Fahrzeugsitzes aus Fig. 1 in einer Einstiegsstellung,
- Fig. 3:: ausschnittsweise eine Seitenansicht des Fahrzeugsitzes aus Fig. 1, insbesondere auf eine als Spindelantrieb für eine Viergelenk-Kinematik ausgebildete Antriebsvorrichtung sowie eine Kupplungsvorrichtung,
- Fig. 4:: ausschnittweise eine perspektivische Ansicht auf den Fahrzeugsitz aus Fig. 1, insbesondere auf eine Schwinge der Viergelenk-Kinematik,
- Fig. 5:: ausschnittweise eine perspektivische Ansicht des Fahrzeugsitzes aus Fig. 1, insbesondere auf die Antriebsvorrichtung sowie eine Kupplungsvorrichtung,
- Fig. 6:: ausschnittsweise den Fahrzeugsitz aus Fig. 1 in der Gebrauchsstellung,
- Fig. 7:: ausschnittsweise den Fahrzeugsitz aus Fig. 1 während einer mittels der Antriebsvorrichtung elektromotorisch angetriebenen Überführung in die Einstiegsstellung,
- Fig. 8:: ausschnittsweise den Fahrzeugsitz aus Fig. 1 in der Einstiegsstellung,
- Fig. 9:: ausschnittsweise den Fahrzeugsitz aus Fig. 1 in der Gebrauchsstellung,
- Fig. 10:: ausschnittsweise den Fahrzeugsitz aus Fig. 1 mit einer geöffneten Klinke der Kupplungsvorrichtung und während einer manuellen Überführung in die Einstiegsstellung und,
- Fig. 11:: ausschnittsweise den Fahrzeugsitz aus Fig. 1 mit geöffneter Klinke der Kupplungsvorrichtung und in der Einstiegsstellung,
- Fig. 12:: stark schematisiert und ausschnittweise eine perspektivische Ansicht des Fahrzeugsitzes aus Fig. 1, insbesondere auf eine Bowdenzugvorrichtung zur synchronisierten Entriegelung von zwei Schlössern mittels eines Bedienhebels,
- Fig. 13:: ausschnittweise eine perspektivische Ansicht des Fahrzeugsitzes gemäß eines zweiten Ausführungsbeispiels in einer Gebrauchsstellung, insbesondere auf eine Antriebsvorrichtung sowie eine Kupplungsvorrichtung,
- Fig. 14:: eine perspektivische Ansicht auf einen vorderen Fuß, die Antriebsvorrichtung sowie die Kupplungsvorrichtung des Fahrzeugsitzes aus Fig. 13,
- Fig. 15:: eine Fig. 14 entsprechende Ansicht aus einer anderen Blickrichtung, und
- Fig. 16:: eine Seitenansicht auf ein Kupplungsglied einer Kupplungsvorrichtung und die Antriebsvorrichtung des Fahrzeugsitzes aus Fig. 13.

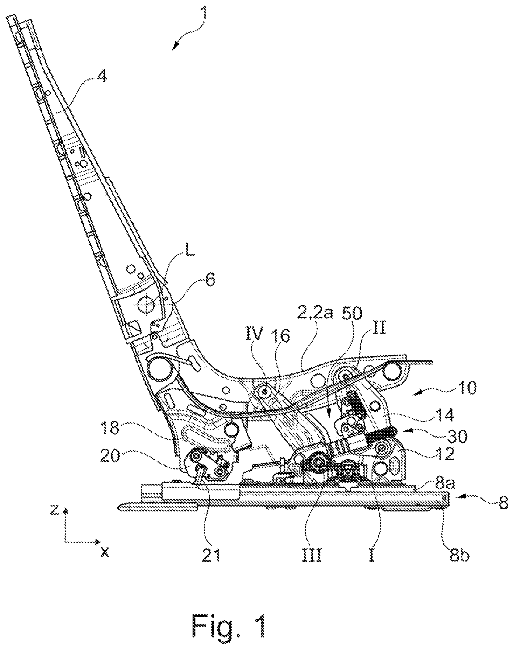

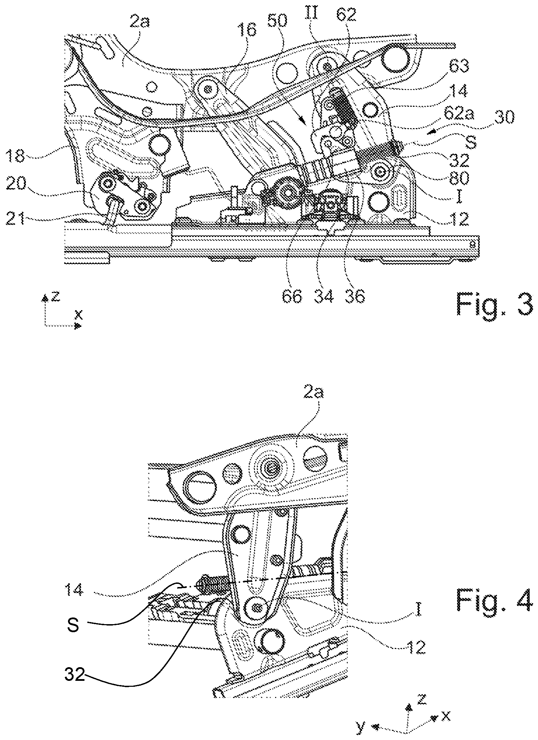

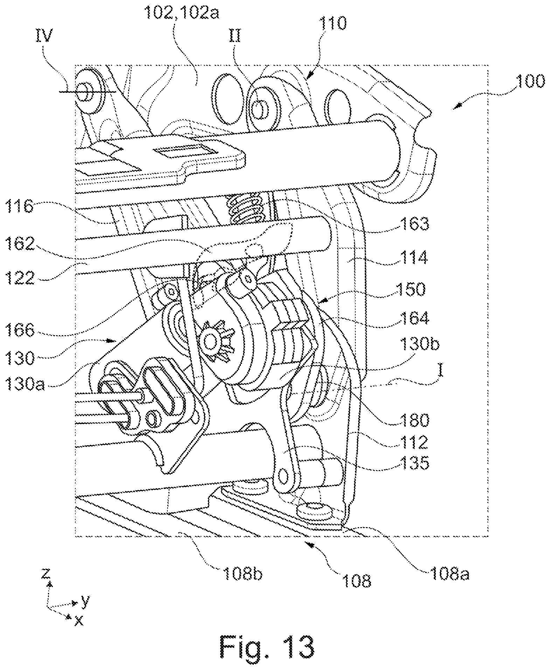

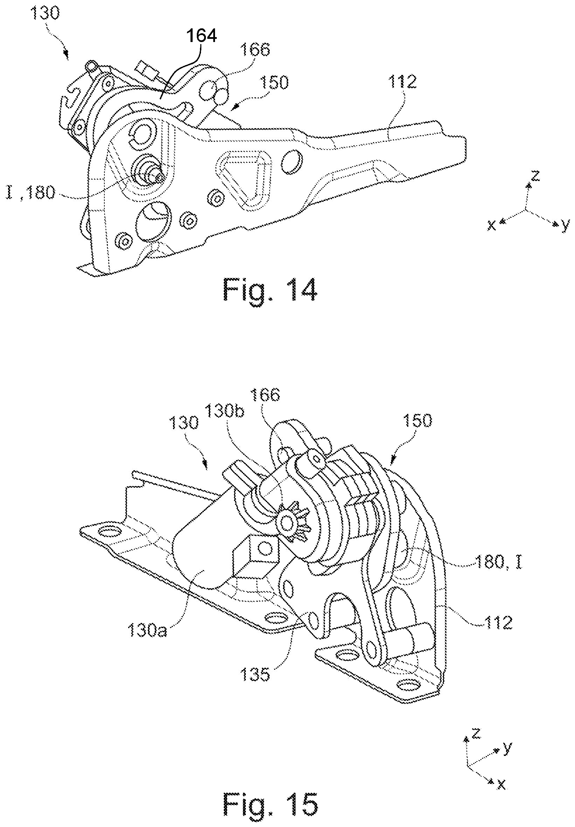

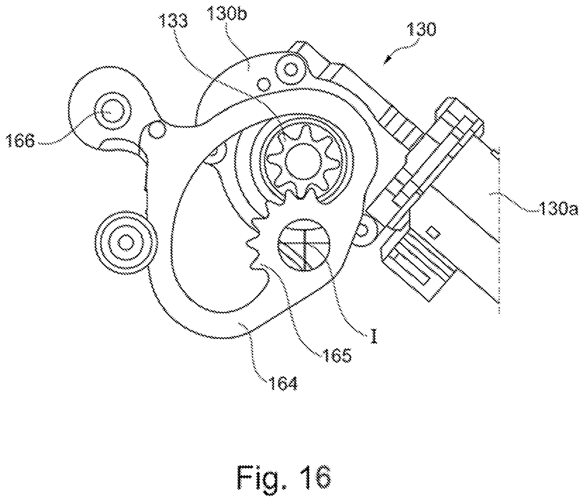

Die Figuren 1 bis 12 zeigen ein erstes Ausführungsbeispiel eines erfindungsgemäßen Fahrzeugsitzes 1. Der Fahrzeugsitz 1, sowie ein in den Figuren 13 bis 16 dargestellter Fahrzeugsitz 100 eines zweiten Ausführungsbeispiels, werden nachfolgend unter Verwendung von drei senkrecht zueinander verlaufenden Raumrichtungen beschrieben. Eine Längsrichtung x verläuft bei einem im Fahrzeug eingebauten Fahrzeugsitz 1; 100 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1; 100 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1; 100 sitzenden Insassen in normaler Sitzposition, wobei der Fahrzeugsitz 1; 100 im Fahrzeug eingebaut, in einer zur Personenbeförderung geeigneten Gebrauchsstellung mit aufrechtstehender Lehne 4 und wie üblich in Fahrtrichtung ausgerichtet ist.

Der Fahrzeugsitz 1; 100, der beispielsweise als Außensitz einer mittleren oder hinteren Sitzreihe eines Kraftfahrzeuges, beispielsweise eines Vans, vorgesehen ist, weist ein Sitzteil 2 und eine Lehne 4 auf. Die Lehne 4 ist mittels wenigstens eines Beschlages 6, vorliegend zweier Beschläge 6, um eine Lehnenschwenkachse L in ihrer Neigung einstellbar, so dass mehrere Gebrauchsstellungen definiert sind. Unter dem Begriff Sitzteil 2 soll die gesamte Baugruppe, aufweisend eine Sitzteilstruktur 2a und ein bezogenes Polster, verstanden werden. Soweit Bauteile am Sitzteil 2 angelenkt sind, ist hierunter eine Anlenkung an der Sitzteilstruktur 2a des Sitzteils 2 zu verstehen. Entsprechendes gilt für die Lehne 4.

Im Folgenden wird der Einfachheit halber nur eine Fahrzeugsitzseite des im Wesentlichen symmetrischen Fahrzeugsitzes 1; 100 beschrieben, d.h. die nachfolgend genannten Bauteile können, wenn nicht abweichend beschrieben, doppelt (gegebenenfalls spiegelsymmetrisch) vorhanden sein.

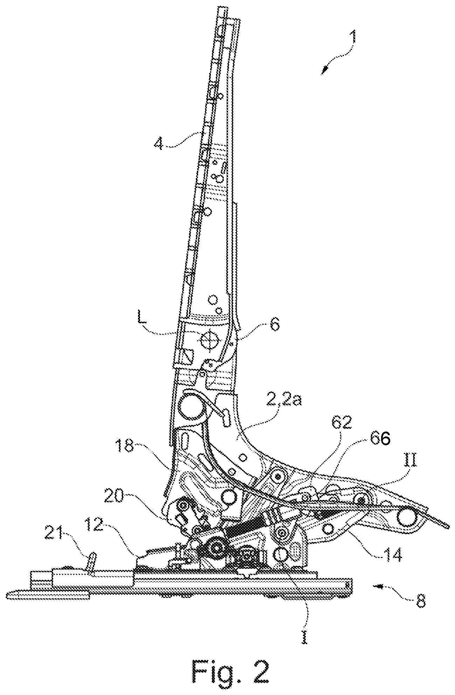

Zunächst wird der Fahrzeugsitz 1 des ersten Ausführungsbeispiels anhand einer in Fig. 1 dargestellten Gebrauchsstellung und einer in Fig. 2 dargestellten Einstiegsstellung (Easy-Entry-Stellung) beschrieben. Die Gebrauchsstellung dient einem Transport wenigstens eines Sitzinsassen. Die Einstiegsstellung ermöglicht einen bequemen Zutritt zu einer hinter dem Fahrzeugsitz 1 angeordneten Sitzreihe.

Eine Basis des Fahrzeugsitzes 1 ist mit einer Struktur des Kraftfahrzeugs, insbesondere einem Fahrzeugboden, verbindbar. Die Basis ist vorliegend als ein Längseinsteller 8 ausgebildet, welcher die Möglichkeit einer Längseinstellung in und entgegen der Längsrichtung x des Fahrzeugsitzes 1 eröffnet. Die Basis weist vorliegend eine direkt mit der Fahrzeugstruktur verbindbare Bodenschiene 8b und eine relativ zu dieser in Längsrichtung x verschiebbare Sitzschiene 8a auf. Die beiden profilierten Schienen 8a, 8b hintergreifen einander wechselseitig mit ihren nach innen bzw. nach außen gebogenen Längsrändern. Vorliegend ist der Längseinsteller 8 in an sich bekannter Weise mittels eines Spindelantriebs in eine beliebige Längseinstellposition innerhalb eines vorgegebenen Einstellbereichs verfahrbar. Alternativ kann ebenso ein Längseinsteller vorgesehen sein, dessen Schienen 8a, 8b mittels einer an sich bekannten Schienenverriegelung miteinander verriegelbar sind, wobei die Schienenverriegelung von einem Insassen des Fahrzeugsitzes 1 mittels eines an sich bekannten Entriegelungsbügels manuell entriegelbar ist.

An der Basis ist ein vorderer Fuß 12 angebracht, vorliegend fest mit der Sitzschiene 8a verbunden. Alternativ kann der vordere Fuß 12 aber auch lösbar mit der Basis, insbesondere der mit der Sitzschiene 8a, verriegelt sein.

Im Bereich eines vorderen Endes des vorderen Fußes 12 ist mittels einer Schwinge 14 das Sitzteil 2 angelenkt, wobei diese Schwinge 14 zwei Enden aufweist und im Bereich dieser beiden Enden jeweils ein Drehgelenk I, II vorgesehen ist, von denen ein erstes Drehgelenk I eine Anlenkung der Schwinge 14 an dem vorderen Fuß 12 und ein zweites Drehgelenk II eine Anlenkung der Schwinge 14 an dem vorderen Ende des Sitzteils 2 bildet. Die Schwinge 14 der linken Fahrzeugsitzseite kann mit der Schwinge 14 der rechten Fahrzeugsitzseite über eine Querverbindung, vorliegend ein Querrohr 22, verbunden sein.

Das Sitzteil 2 ist mittels eines hinter der Schwinge 14 angeordneten Lenkers 16 am vorderen Fuß 12 angelenkt. Der Lenker 16 weist zwei Enden auf, wobei im Bereich dieser beiden Enden jeweils ein Drehgelenk III, IV vorgesehen ist. Ein drittes Drehgelenk III bildet eine Anlenkung des Lenkers 16 an dem vorderen Fuß 12 und ein viertes Drehgelenk IV bildet eine Anlenkung des Lenkers 16 an dem Sitzteil 2. Auf beiden Seiten des Fahrzeugsitzes 1 ist genau ein solcher Lenker 16 entsprechend angeordnet.

Der vordere Fuß 12, die Schwinge 14, der Lenker 16 und das Sitzteil 2 bilden eine Kinematik 10, vorliegend eine Viergelenkanordnung. Der Fahrzeugsitz 1 ist mittels der Kinematik 10 entlang einer vorgegebenen Bewegungsbahn von der Gebrauchsstellung in die Einstiegsstellung und zurück bewegbar.

An der Basis ist ferner in Längsrichtung x hinter dem vorderen Fuß 12 ein vom vorderen Fuß 12 gesondert ausgebildeter hinterer Fuß 18 angeordnet. Der hintere Fuß 18 der linken Fahrzeugsitzseite ist mit dem hinteren Fuß 18 der rechten Fahrzeugsitzseite über eine Querverbindung verbunden. Der hintere Fuß 18 ist mittels eines an dem hinteren Fuß 18 angebrachten Schlosses 20 lösbar mit der Basis verriegelt, genauer gesagt mit einem basisfesten Schließelement, vorliegend mit einem an der Sitzschiene 8a befestigten Schlossbügel 21, und ist damit indirekt mit der Fahrzeugstruktur verbindbar. Der Schlossbügel 21 ist in einem mit dem Schloss 20 verriegelten Zustand in einer schlitzartigen Aufnahmeöffnung des hinteren Fußes 18 oder alternativ eines Schlossgehäuses des Schlosses 20 zentriert und wird durch eine Drehfalle, des Schlosses 20 am Verlassen der Aufnahmeöffnung gehindert. Die Aufnahmeöffnung weist eine V-förmige Kontur auf und ist in Richtung der Basis geöffnet. Die Aufnahmeöffnung läuft in einer von der Basis weg orientierten Richtung konisch zu. In der Gebrauchsstellung des Fahrzeugsitzes 1 fixieren die Aufnahmeöffnung und die Drehfalle des Schlosses 20 den hinteren Fuß 18 relativ zur Basis.

Auf einer der beiden Fahrzeugsitzseiten ist im Bereich der Schwinge 14 eine Antriebsvorrichtung 30 und eine Kupplungsvorrichtung 50 angeordnet. Die Antriebsvorrichtung 30 und die Kupplungsvorrichtung 50 sind nicht zwingend beidseitig, insbesondere nicht symmetrisch zu einer Mittelebene des Fahrzeugsitzes 1, vorgesehen und angeordnet. Je nach Einbausituation des Fahrzeugsitzes 1 in einem Fahrzeug können die Antriebsvorrichtung 30 und die Kupplungsvorrichtung 50 wahlweise auf der linken oder der rechten Fahrzeugsitzseite angeordnet sein.

Die Antriebsvorrichtung 30 weist einen Elektromotor 30a und ein mit dem Elektromotor 30a verbundenes Getriebe 30b auf. Abtriebsseitig des Getriebes 30b ist eine mittels des Elektromotors 30a um eine Spindelachse S rotierend antreibbare Spindel 32 angeordnet. Der Elektromotor 30a ist bevorzugt relativ zu dem vorderen Fuß 12 an der Basis des Fahrzeugsitzes 1 in einem Gegenlager fixierbar gehalten. Durch eine Rotationsbewegung der Spindel 32 um die Spindelachse S ist eine in einem Verbindungsglied 36 gehaltene Spindelmutter 34 in Richtung der Spindelachse S entlang der Spindel 32 bewegbar. Die Spindelmutter 34 bewegt sich translatorisch entlang der Spindel 32, wenn die Spindel 32 dreht.

Die Kupplungsvorrichtung 50 weist ein Kupplungsmittel 60 und ein Kupplungsglied 64 auf, die beide um eine gemeinsame Schwenkachse, die mit der Schwenkachse des ersten Drehgelenks I fluchtet, schwenkbar sind.

Ein die Spindelmutter 34 aufnehmendes Verbindungsglied 36 ist mit dem Kupplungsglied 64 der Kupplungsvorrichtung 50 schwenkbar verbunden. Das Kupplungsglied 64 ist um einen zweiten Lagerbolzen 80 schwenkbar an dem vorderen Fuß 12 gelagert. Das Kupplungsglied 64 weist einen Bolzen 66 auf. Der Bolzen 66 ist ein Gegenelement, das mit einer Klinke 62 verriegelbar ist. Der Bolzen 66 ist bevorzugt mit dem Kupplungsglied 64 verschweißt.

Das Kupplungsmittel 60 weist einen Träger 61 und die als eine Spannklinke ausgeführte Klinke 62 auf, die um einen ersten Lagerbolzen 62a drehbar an dem Träger 61 gelagert ist. Der Träger 61 ist fest mit der Schwinge 14 verbunden. In einer Abwandlung des ersten Ausführungsbeispiels kann der Träger 61 einteilig mit der Schwinge 14 ausgeführt sein.

Die Klinke 62 des Kupplungsmittels 60 wirkt mit dem Bolzen 66 des Kupplungsglieds 64 verriegelnd zusammen. Die Klinke 62 ist mittels einer Feder 63 in Richtung einer mit dem Bolzen 66 verriegelnden Stellung vorgespannt.

Die Klinke 62 ist außerhalb der Selbsthemmung ausgelegt, d.h. unter Belastung übt der Bolzen 66 ein öffnendes Drehmoment auf die Klinke 62 aus. Diesem öffnenden Drehmoment wirkt die Kraft der Feder 63 solange verriegelnd entgegen, bis das öffnende Drehmoment größer ist als ein durch die Kraft der Feder 63 erzeugtes Gegenmoment. Übersteigt das durch den Bolzen 66 auf die Klinke 62 ausgeübte Drehmoment das Gegenmoment, öffnet die Klinke 62 und gibt den Bolzen 66 frei.

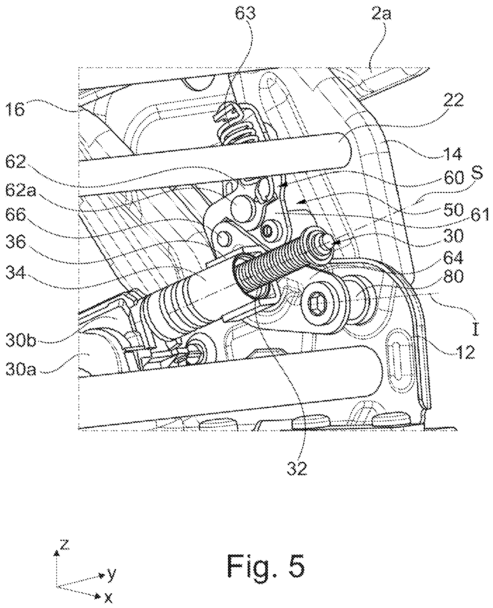

Figur 5 zeigt ausschnittweise eine perspektivische Ansicht auf den Fahrzeugsitz 1, insbesondere eine perspektivische Ansicht auf die Klinke 62 und die Antriebsvorrichtung 30, wobei sich die Klinke 62 in einem den Bolzen 66 verriegelnden Zustand befindet. Die Klinke 62 koppelt im mit dem Bolzen 66 verriegelten Zustand den Träger 61 und somit die Schwinge 14 an das Kupplungsglied 64 und somit an die Antriebsvorrichtung 30, so dass mittels der Antriebsvorrichtung 30 sowohl das das Kupplungsglied 64 als auch das Kupplungsmittel 60 schwenkbar sind.

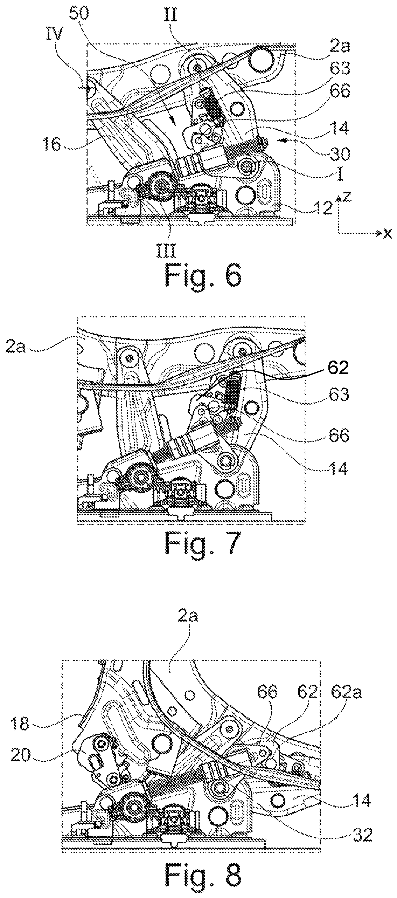

Ein Überführen des Fahrzeugsitzes 1 von der Gebrauchsstellung in die Einstiegsstellung erleichtert den Zugang zu einer hinter dem Fahrzeugsitz 1 angeordneten Sitzreihe. Das Einnehmen dieser Einstiegsstellung mittels der Antriebsvorrichtung 30 ist nachfolgend anhand der Figuren 6 bis 8 beschrieben.

Figur 6 zeigt die Gebrauchsstellung des Fahrzeugsitzes 1. Figur 7 zeigt den Fahrzeugsitz 1 während der Überführung in die Einstiegsstellung. Nach einer Entriegelung der beiden Schlösser 20 durch einen in den Figuren nicht dargestellten, insbesondere elektromechanischen Aktuator, treibt die Antriebsvorrichtung 30 über die Klinke 62 die Schwinge 14 in der zuvor beschriebenen Weise an. Dabei übersteigt die Kraft, den der Bolzen 66 auf die Klinke 62 ausübt, nicht eine Grenzkraft, die die Klinke 62 öffnen würde. Figur 8 zeigt den Fahrzeugsitz 1 in der Einstiegsstellung.

Für eine Entkopplung der Antriebsvorrichtung 30 von der Schwinge 14, insbesondere zur Bereitstellung eines Notausstiegs durch Einnehmen der Einstiegsstellung nach einem Unfall, sind zunächst mittels des Bedienhebels 96 die beiden Schlösser 20 manuell zu entriegeln, wodurch die hinteren Füße 18 von der Basis, vorliegend der Sitzschiene 8a, entkoppelt sind. Es ist anschließend jedoch keine aktive Entriegelung der Klinke 62 erforderlich.

In einer in den Figuren nicht dargestellten Abwandlung des Ausführungsbeispiels sind zur manuellen Entriegelung der beiden Schlösser 20 anstelle des Bedienhebels 96 zwei Zugschlaufen, insbesondere aus einem Textilband, vorgesehen. Eine erste Zugschlaufe ist nach hinten geführt und dient insbesondere einer Entriegelung der beiden Schlösser 20 durch eine Person, die auf einer hinter dem Fahrzeugsitz 1 angeordneten weiteren Sitzreihe sitzt. Eine zweite Zugschlaufe ist nach vorne geführt und dient insbesondere einer Entriegelung der beiden Schlösser 20 von vorne durch eine neben oder vor dem Fahrzeugsitz 1 befindlichen Person.

Ein Entriegeln der Klinke 62 kann durch das Aufbringen einer, insbesondere parallel zur Längsrichtung x nach vorne wirkenden, Betätigungskraft auf die Lehnenoberkante der Lehne 4 erfolgen. Anschließend kann der Fahrzeugsitz 1 mittels der Kinematik 10 vollständig zur Bereitstellung des Notausstiegs in die Einstiegsstellung vorgeschwenkt werden. Somit kann insbesondere auf einen zusätzlichen Bowdenzug und einen weiteren Bedienhebel zur Betätigung der Klinke 62 verzichtet werden.

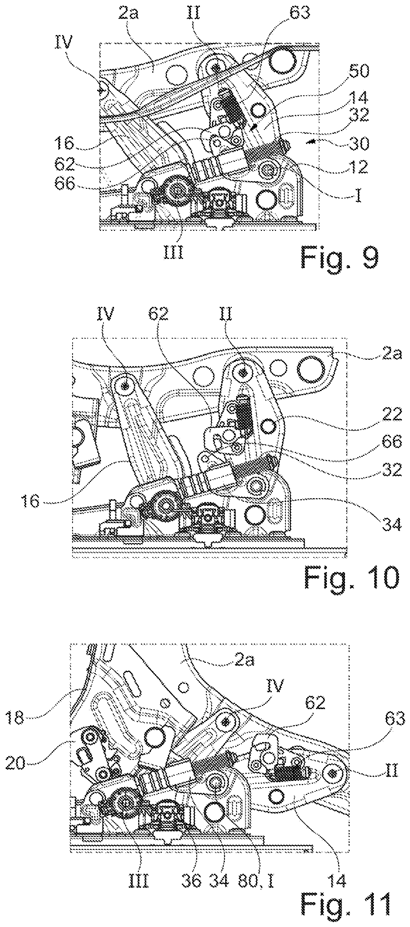

Das Einnehmen der Einstiegsstellung als Notausstieg ist nachfolgend anhand der Figuren 9 bis 11 im Detail beschrieben. Figur 9 zeigt die Gebrauchsstellung des Fahrzeugsitzes 1. Durch Drücken der Lehnenoberkante der Lehne 4 nach vorne öffnet die Klinke 62 (nachdem zuvor die Schlösser 20 geöffnet wurden). Figur 10 zeigt den Fahrzeugsitz 1 während der Überführung in die Einstiegsstellung durch Drücken an der Lehnenoberkante bei geöffneter Klinke 62 und Figur 11 zeigt den Fahrzeugsitz 1 in der Einstiegsstellung. Die entkoppelte Antriebsvorrichtung 30 bleibt während des Übergangs vorzugsweise unbetätigt.

In einem Normalgebrauch des Fahrzeugsitzes kann in der Einstiegsstellung eine nach vorne auf die Lehne 4 wirkende Missbrauchskraft (Missuse-Kraft) in einen Endanschlag der Sitzstruktur des Fahrzeugsitzes 1 eingeleitet werden, so dass die Klinke 62 nicht in der zuvor beschriebenen Weise mit einem öffnenden Moment beaufschlagt wird. Eine nach hinten wirkende Missbrauchskraft (Missuse-Kraft) auf die Lehne 4 wirkt auf die Spindel 32. Dabei öffnet die Klinke 62 ebenfalls nicht.

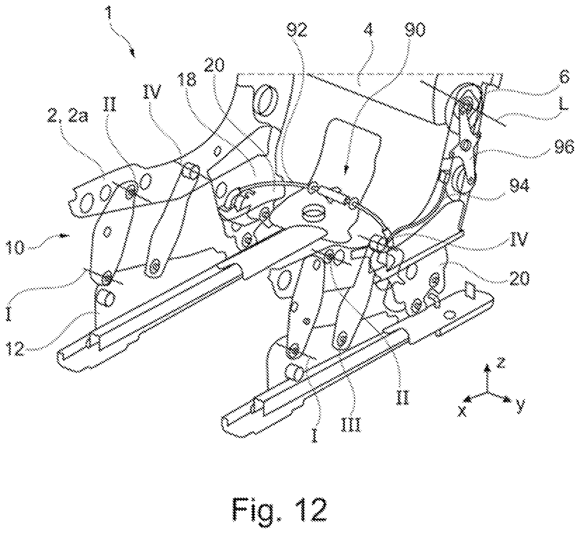

Der Fahrzeugsitz 1 weist eine in Figur 12 dargestellte Bowdenzugvorrichtung 90 zur manuellen Entriegelung der Schlösser 20 auf. Die Bowdenzugvorrichtung 90 umfasst einen ersten Bowdenzug 92, einen zweiten Bowdenzug 94 und einen Bedienhebel 96. Mittels des ersten Bowdenzugs 92 sind die beiden Schlösser 20 miteinander synchron entriegelbar. Der zweite Bowdenzug 94 verbindet den Bedienhebel 96 mit einem der beiden Schlösser 20. Durch Betätigung des Bedienhebel 96 sind über die Bowdenzüge 92, 94 beide Schlösser 20 synchron entriegelbar. Die Bowdenzugvorrichtung 90 dient der Bereitstellung eines Notausstiegs, indem die Schlösser manuell entriegelbar sind. Der zuvor beschriebene elektromechanische Aktuator muss daher für einen Notausstieg nicht bestromt werden.

Die Figuren 13 bis 16 zeigen das zweite Ausführungsbeispiel eines erfindungsgemäßen Fahrzeugsitzes 100. Der Aufbau und die Funktionsweise des Fahrzeugsitzes 100 entsprechen dem Fahrzeugsitz 1 des ersten Ausführungsbeispiels, sofern nachfolgend nicht abweichend beschrieben, so dass die Beschreibung des Fahrzeugsitzes 1 entsprechend auch für den Fahrzeugsitz 100 zutrifft. Gleiche oder gleichwirkende Bauteile weisen um 100 höhere Bezugszeichen auf.

Der Fahrzeugsitz 100 weist ein Sitzteil 102, eine Lehne, einen Längseinsteller 108 mit einer Sitzschiene 108a und einer Bodenschiene 108b, eine Kinematik 110 mit einem vorderen Fuß 112, einer Schwinge 114 und einem Lenker 116, eine Antriebsvorrichtung 130 und eine Kopplungsvorrichtung 150 auf.

Der Fahrzeugsitzes 100 unterscheidet sich von dem Fahrzeugsitz 1 des ersten Ausführungsbeispiels im Wesentlichen nur durch einen nachfolgend beschriebenen, abweichenden Aufbau der Antriebsvorrichtung 130 und der Kupplungsvorrichtung 150.

Die Kupplungsvorrichtung 150 weist ein Kupplungsmittel 160 und ein Kupplungsglied 164 auf. Das Kupplungsglied 164 ist um einen zweiten Lagerbolzen 180 schwenkbar an dem vorderen Fuß 112 gelagert. Das Kupplungsmittel 160 umfasst eine Klinke 162, die mittels eines ersten Lagerbolzens 162a gelagert und mittels einer Feder 163 in eine Schließrichtung mit einem Drehmoment beaufschlagt ist. Die Klinke 162 ist mit einem Gegenelement, vorliegend einem Bolzen 166 des Kupplungsglieds 164, in der zuvor beschriebenen Weise außerhalb der Selbsthemmung verriegelbar.

Die Antriebsvorrichtung 130 des Fahrzeugsitzes 100 weist einen Motor 130a und ein Getriebe 130b auf. Die Antriebsvorrichtung 130 ist mittels eines Adapters 135 mit dem vorderen Fuß 112 verbunden. Das Getriebe 130b weist als Abtrieb ein Ritzel 133 auf, das mit einer Verzahnung 165 des Kupplungsglieds 164 in Zahneingriff ist. Durch Betätigung des Motors 130a dreht das Ritzel 133 und wälzt dadurch in der Verzahnung 165 ab, so dass das Kupplungsglied 164 schwenkt.

Der Unterschied zwischen dem Fahrzeugsitz 1 des ersten Ausführungsbeispiels und dem Fahrzeugsitz 100 des zweiten Ausführungsbeispiels besteht ausschließlich darin, dass im ersten Ausführungsbeispiel die Antriebsvorrichtung 30 das Kopplungsglied 64 über eine Spindel 32 antreibt, während im zweiten Ausführungsbeispiel die Antriebsvorrichtung 130 das Kopplungsglied 164 über ein Ritzel 133 antreibt. Im Übrigen entsprechen die Ausführungsbeispiele einander.

### Bezugszeichenliste

- 1; 100: Fahrzeugsitz
- 2; 102: Sitzteil
- 2a; 102a: Sitzteilstruktur
- 4: Lehne
- 6: Beschlag
- 8; 108: Längseinsteller
- 8a; 108a: Sitzschiene
- 8b; 108b: Bodenschiene
- 10; 110: Kinematik
- 12; 112: vorderer Fuß
- 14; 114: Schwinge
- 16; 116: Lenker
- 18: hinterer Fuß
- 20: Schloss
- 21: Schlossbügel
- 22: Querrohr
- 30; 130: Antriebsvorrichtung
- 30a; 130a: Elektromotor
- 30b; 130b: Getriebe
- 32: Spindel
- 34: Spindelmutter
- 36: Verbindungsglied
- 50; 150: Kupplungsvorrichtung
- 60; 160: Kupplungsmittel
- 61: Träger
- 62; 162: Klinke
- 62a; 162a: erster Lagerbolzen
- 63; 163: Feder
- 64; 164: Kupplungsglied
- 66; 166: Bolzen
- 80; 180: zweiter Lagerbolzen
- 90: Bowdenzugvorrichtung
- 92: erster Bowdenzug
- 94: zweiter Bowdenzug
- 96: Bedienhebel
- 133: Ritzel
- 135: Adapter
- 165: Verzahnung

- I: erstes Drehgelenk
- II: zweites Drehgelenk
- III: drittes Drehgelenk
- IV: viertes Drehgelenk
- L: Lehnenschwenkachse
- S: Spindelachse
- x: Längsrichtung
- y: Querrichtung
- z: Vertikalrichtung

## Patentansprüche

1. Fahrzeugsitz (1; 100), insbesondere Kraftfahrzeugsitz, mit
a) einem Sitzteil (2),
b) einer Lehne (4),
c) einer Kinematik (10; 110) zur Überführung des Fahrzeugsitzes (1; 100) von einer zur Personenbeförderung geeigneten Gebrauchsstellung in eine Einstiegsstellung und zurück,
d) einer Antriebsvorrichtung (30; 130) zum Antrieb der Kinematik (10; 110), und
e) einer Kupplungsvorrichtung (50; 150) zur Kopplung der Antriebsvorrichtung (30; 130) an die Kinematik (10; 110), die Kupplungsvorrichtung (50; 150) aufweisend eine Klinke (62; 162) und ein Gegenelement, insbesondere einen Bolzen (66; 166), wobei
zur Kopplung der Antriebsvorrichtung (30; 130) an die Kinematik (10; 110) die Klinke (62; 162) und das Gegenelement miteinander verriegelbar sind, und durch eine Betätigung der Kupplungsvorrichtung (50; 150) die Klinke (62; 162) von dem Gegenelement lösbar ist, wodurch die Antriebsvorrichtung (30; 130) von der Kinematik (10; 110) entkoppelbar ist,
**dadurch gekennzeichnet, dass**
die Klinke (62; 162) als eine Spannklinke ausgeführt ist, wobei die Klinke (62; 162) und das Gegenelement außerhalb der Selbsthemmung miteinander verriegelbar sind.

2. Fahrzeugsitz (1; 100) nach Anspruch 1, **dadurch gekennzeichnet, dass** das Gegenelement ausschließlich mit der Klinke (62; 162) verriegelbar ist.

3. Fahrzeugsitz (1; 100) nach Anspruch 1 oder 2, **dadurch gekennzeichnet, dass** ein Kraftspeicher, insbesondere eine Feder (63; 163), die Klinke (62; 162) in Richtung einer mit dem Gegenelement verriegelnden Stellung vorgespannt.

4. Fahrzeugsitz (1; 100) nach einem der Ansprüche 1 bis 3, **dadurch gekennzeichnet, dass** die Kupplungsvorrichtung (50; 150) durch Aufbringen einer Betätigungskraft auf den Fahrzeugsitz (1; 100), insbesondere auf die Lehne (4) des Fahrzeugsitzes (1; 100), betätigbar ist.

5. Fahrzeugsitz (1; 100) nach Anspruch 3 und 4, **dadurch gekennzeichnet, dass** durch das Aufbringen der Betätigungskraft auf den Fahrzeugsitz (1; 100) die Klinke (62; 162) über das Gegenelement mit einem öffnenden Drehmoment beaufschlagbar ist, wobei die Klinke (62; 162) von dem Gegenelement lösbar ist, indem das öffnende Drehmoment größer ist als ein durch den Kraftspeicher auf die Klinke (62; 162) ausgeübtes schließendes Drehmoment.

6. Fahrzeugsitz (1; 100) nach einem der Ansprüche 1 bis 5, **dadurch gekennzeichnet, dass** die Antriebsvorrichtung (30; 130) einen Elektromotor (30a; 130a) und insbesondere ein Getriebe (30b; 130b) aufweist.

7. Fahrzeugsitz (1; 100) nach einem der Ansprüche 1 bis 6, **dadurch gekennzeichnet, dass** die Kupplungsvorrichtung (50; 150) ein Kupplungsmittel (60; 160) und ein Kupplungsglied (64; 164) aufweist.

8. Fahrzeugsitz (1; 100) nach Anspruch 7, **dadurch gekennzeichnet, dass** das Kupplungsglied (64; 164) mit der Antriebsvorrichtung (30; 130) wirkverbunden ist.

9. Fahrzeugsitz (1) nach Anspruch 8, **dadurch gekennzeichnet, dass** das Kupplungsglied (64) wenigstens mittelbar, insbesondere schwenkbar, mit einer Spindelmutter (34) verbunden ist, wobei die Spindelmutter (34) mit einer Spindel (32) der Antriebsvorrichtung (30) zusammenwirkt.

10. Fahrzeugsitz (100) nach Anspruch 8, **dadurch gekennzeichnet, dass** das Kupplungsglied (164) eine Verzahnung (165) aufweist, die mit einem Ritzel (133) der Antriebsvorrichtung (130) zusammenwirkt.

11. Fahrzeugsitz (1; 100) nach einem der Ansprüche 7 bis 10, **dadurch gekennzeichnet, dass** die Klinke (62; 162) an dem einen von Kupplungsmittel (60; 160) und Kupplungsglied (64; 164) angelenkt ist, und das Gegenmittel an dem anderen von Kupplungsmittel (60; 160) und Kupplungsglied (64; 164) befestigt ist.

12. Fahrzeugsitz (1; 100) nach Anspruch 11, **dadurch gekennzeichnet, dass** die Klinke (62; 162) an einem Träger (61) des Kupplungsmittels (60; 160) schwenkbar angelenkt ist.

13. Fahrzeugsitz (1; 100) nach einem der Ansprüche 7 bis 12, **dadurch gekennzeichnet, dass** das Kupplungsmittel (60; 160) und das Kupplungsglied (64; 164) um eine gemeinsame Schwenkachse schwenkbar gelagert sind.

14. Fahrzeugsitz (1; 100) nach Anspruch 13, **dadurch gekennzeichnet, dass** die gemeinsame Schwenkachse des Kupplungsmittels (60; 160) und des Kupplungsglieds (64; 164) mit einer Drehachse eines Drehgelenks (I) der Kinematik (10; 110) fluchtet.

15. Fahrzeugsitz (1; 100) nach Anspruch 14, **dadurch gekennzeichnet, dass** die Kinematik (10; 110) eine Schwinge (14; 114) aufweist, wobei die Schwinge (14; 114) mittels des Drehgelenks (I) um die gemeinsame Schwenkachse des Kupplungsmittels (60; 160) und des Kupplungsglieds (64; 164) schwenkbar ist.

## Claims

1. Vehicle seat (1; 100), in particular a motor vehicle seat, with
a) a seat part (2),
b) a backrest (4),
c) a kinematics system (10; 110) for transferring the vehicle seat (1; 100) from a use position, suitable for passenger transport, into an entry position and back,
d) a drive apparatus (30; 130) for driving the kinematics system (10; 110), and
e) a coupling apparatus (50; 150) for coupling the drive apparatus (30; 130) to the kinematics system (10; 110), the coupling apparatus (50; 150) having a pawl (62; 162) and a counter-element, in particular a pin (66; 166),
it being possible for the pawl (62; 162) and the counter-element to be locked to one another in order to couple the drive apparatus (30; 130) to the kinematics system (10; 110), and it being possible for the pawl (62; 162) to be released from the counter-element by way of an actuation of the coupling apparatus (50; 150), as a result of which the drive apparatus (30; 130) can be decoupled from the kinematics system (10; 110),
**characterized in that**
the pawl (62; 162) is configured as a bracing pawl, it being possible for the pawl (62; 162) and the counter-element to be locked to one another beyond the self-locking action.

2. Vehicle seat (1; 100) according to Claim 1, **characterized in that** the counter-element can be locked exclusively to the pawl (62; 162).

3. Vehicle seat (1; 100) according to Claim 1 or 2, **characterized in that** a force accumulator, in particular a spring (63; 163), preloads the pawl (62; 162) in the direction of a position which locks it to the counter-element.

4. Vehicle seat (1; 100) according to one of Claims 1 to 3, **characterized in that** the coupling apparatus (50; 150) can be actuated by way of the application of an actuating force to the vehicle seat (1; 100), in particular to the backrest (4) of the vehicle seat (1; 100) .

5. Vehicle seat (1; 100) according to Claims 3 and 4, **characterized in that** the pawl (62; 162) can be loaded via the counter-element with an opening torque by way of the application of the actuating force to the vehicle seat (1; 100), it being possible for the pawl (62; 162) to be released from the counter-element, by the opening torque being greater than a closing torque which is exerted on the pawl (62; 162) by way of the force accumulator.

6. Vehicle seat (1; 100) according to one of Claims 1 to 5, **characterized in that** the drive apparatus (30; 130) has an electric motor (30a; 130a) and, in particular, a gear mechanism (30b; 130b).

7. Vehicle seat (1; 100) according to one of Claims 1 to 6, **characterized in that** the coupling apparatus (50; 150) has a coupling means (60; 160) and a coupling link (64; 164).

8. Vehicle seat (1; 100) according to Claim 7, **characterized in that** the coupling link (64; 164) is operatively connected to the drive apparatus (30; 130).

9. Vehicle seat (1) according to Claim 8, **characterized in that** the coupling link (64) is connected to a spindle nut (34) at least indirectly, in particular pivotably, the spindle nut (34) interacting with a spindle (32) of the drive apparatus (30).

10. Vehicle seat (100) according to Claim 8, **characterized in that** the coupling link (164) has a toothing system (165) which interacts with a pinion (133) of the drive apparatus (130).

11. Vehicle seat (1; 100) according to one of Claims 7 to 10, **characterized in that** the pawl (62; 162) is articulated on one of the coupling means (60; 160) and the coupling link (64; 164), and the counter-means is fastened to the other one of the coupling means (60; 160) and the coupling link (64; 164).

12. Vehicle seat (1; 100) according to Claim 11, **characterized in that** the pawl (62; 162) is articulated pivotably on a carrier (61) of the coupling means (60; 160) .

13. Vehicle seat (1; 100) according to one of Claims 7 to 12, **characterized in that** the coupling means (60; 160) and the coupling link (64; 164) are mounted pivotably about a common pivot axis.

14. Vehicle seat (1; 100) according to Claim 13, **characterized in that** the common pivot axis of the coupling means (60; 160) and of the coupling link (64; 164) is aligned with a rotational axis of a rotary joint (I) of the kinematics system (10; 110).

15. Vehicle seat (1; 100) according to Claim 14, **characterized in that** the kinematics system (10; 110) has a motion link (14; 114), it being possible for the motion link (14; 114) to be pivoted by the rotary joint (I) about the common pivot axis of the coupling means (60; 160) and of the coupling link (64; 164).

## Revendications

1. Siège de véhicule (1 ; 100), notamment siège de véhicule automobile, avec
a) une partie d'assise (2),
b) un dossier (4),
c) une cinématique (10 ; 110) pour faire passer le siège de véhicule (1 ; 100) d'une position d'utilisation appropriée pour le transport de personnes à une position d'accès et inversement,
d) un dispositif d'entraînement (30 ; 130) pour entraîner la cinématique (10 ; 110), et
e) un dispositif d'accouplement (50 ; 150) pour accoupler le dispositif d'entraînement (30 ; 130) à la cinématique (10 ; 110), le dispositif d'accouplement (50 ; 150) présentant un cliquet (62 ; 162) et un contre-élément, notamment un boulon (66 ; 166),
pour accoupler le dispositif d'entraînement (30 ; 130) à la cinématique (10 ; 110), le cliquet (62 ; 162) et le contre-élément pouvant être verrouillés l'un à l'autre et, par un actionnement du dispositif d'accouplement (50 ; 150), le cliquet (62 ; 162) pouvant être détaché du contre-élément, moyennant quoi le dispositif d'entraînement (30 ; 130) peut être découplé de la cinématique (10 ; 110),
**caractérisé en ce que**
le cliquet (62 ; 162) est réalisé sous la forme d'un cliquet de serrage, le cliquet (62 ; 162) et le contre-élément pouvant être verrouillés l'un à l'autre en dehors de l'auto-blocage.

2. Siège de véhicule (1 ; 100) selon la revendication 1, **caractérisé en ce que** le contre-élément peut être verrouillé exclusivement avec le cliquet (62 ; 162).

3. Siège de véhicule (1 ; 100) selon la revendication 1 ou 2, **caractérisé en ce qu'**un accumulateur de force, notamment un ressort (63 ; 163), précontraint le cliquet (62 ; 162) en direction d'une position de verrouillage avec le contre-élément.

4. Siège de véhicule (1 ; 100) selon l'une quelconque des revendications 1 à 3, **caractérisé en ce que** le dispositif d'accouplement (50 ; 150) peut être actionné par application d'une force d'actionnement au siège de véhicule (1 ; 100), notamment au dossier (4) du siège de véhicule (1 ; 100).

5. Siège de véhicule (1 ; 100) selon les revendications 3 et 4, **caractérisé en ce que** l'application de la force d'actionnement au siège de véhicule (1 ; 100) permet de solliciter le cliquet (62 ; 162) par l'intermédiaire du contre-élément avec un couple d'ouverture, le cliquet (62 ; 162) pouvant être détaché du contre-élément du fait que le couple d'ouverture est supérieur à un couple de fermeture exercé par l'accumulateur de force sur le cliquet (62 ; 162).

6. Siège de véhicule (1 ; 100) selon l'une quelconque des revendications 1 à 5, **caractérisé en ce que** le dispositif d'entraînement (30 ; 130) présente un moteur électrique (30a ; 130a) et notamment une transmission (30b ; 130b).

7. Siège de véhicule (1 ; 100) selon l'une quelconque des revendications 1 à 6, **caractérisé en ce que** le dispositif d'accouplement (50 ; 150) présente un moyen d'accouplement (60 ; 160) et un organe d'accouplement (64 ; 164).

8. Siège de véhicule (1 ; 100) selon la revendication 7, **caractérisé en ce que** l'organe d'accouplement (64 ; 164) est relié fonctionnellement au dispositif d'entraînement (30 ; 130).

9. Siège de véhicule (1) selon la revendication 8, **caractérisé en ce que** l'organe d'accouplement (64) est relié au moins indirectement, notamment de manière pivotante, à un écrou de broche (34), l'écrou de broche (34) coopérant avec une broche (32) du dispositif d'entraînement (30).

10. Siège de véhicule (100) selon la revendication 8, **caractérisé en ce que** l'organe d'accouplement (164) présente une denture (165) qui coopère avec un pignon (133) du dispositif d'entraînement (130).

11. Siège de véhicule (1 ; 100) selon l'une quelconque des revendications 7 à 10, **caractérisé en ce que** le cliquet (62 ; 162) est articulé sur un parmi le moyen d'accouplement (60 ; 160) et l'organe d'accouplement (64 ; 164), et le contre-moyen est fixé sur l'autre parmi le moyen d'accouplement (60 ; 160) et l'organe d'accouplement (64 ; 164).

12. Siège de véhicule (1 ; 100) selon la revendication 11, **caractérisé en ce que** le cliquet (62 ; 162) est articulé de manière pivotante sur un support (61) du moyen d'accouplement (60 ; 160).

13. Siège de véhicule (1 ; 100) selon l'une quelconque des revendications 7 à 12, **caractérisé en ce que** le moyen d'accouplement (60 ; 160) et l'organe d'accouplement (64 ; 164) sont montés de manière pivotante autour d'un axe de pivotement commun.

14. Siège de véhicule (1 ; 100) selon la revendication 13, **caractérisé en ce que** l'axe de pivotement commun du moyen d'accouplement (60 ; 160) et de l'organe d'accouplement (64 ; 164) est aligné avec un axe de rotation d'une articulation rotative (1) de la cinématique (10 ; 110).

15. Siège de véhicule (1 ; 100) selon la revendication 14, **caractérisé en ce que** la cinématique (10 ; 110) présente un bras oscillant (14 ; 114), le bras oscillant (14 ; 114) pouvant pivoter autour de l'axe de pivotement commun du moyen d'accouplement (60 ; 160) et de l'organe d'accouplement (64 ; 164) au moyen de l'articulation rotative (1).
